# FASCICULE DE BREVET EUROPEEN

(11) **EP 3 529 028 B1**
(45) Date de publication et mention de la délivrance du brevet: **07.12.2022**
(21) Numéro de dépôt: 17793873.5
(22) Date de dépôt: 18.10.2017
(51) Int. Cl.: B29C 45/14, B29C 45/04, B29C 70/08, B29C 70/46, B29C 33/06, H05B 6/10, B29C 45/73, B29C 35/08

(54) **PROCÉDÉ ET DISPOSITIF POUR LA CONSOLIDATION D'UNE PRÉFORME TEXTILE ET SURMOULAGE**
VERFAHREN UND VORRICHTUNG ZUM VERFESTIGEN EINER TEXTILEN VORFORM UND UMSPRITZEN
METHOD AND DEVICE FOR CONSOLIDATING A TEXTILE PREFORM AND OVERMOULDING

(30) Priorité: 19.10.2016 FR 1670612
(43) Date de publication de la demande: 28.08.2019
(73) Titulaire: Roctool, 73370 Le Bourget-du-Lac (FR)
(72) Inventeur: FEIGENBLUM, José, 73170 Saint-Paul (FR)
(74) Mandataire: Ipside
(86) Numéro de dépôt international: PCT/EP2017/076650
(87) Numéro de publication internationale: WO 2018/073324

(56) Documents cités:
- EP-A1- 0 576 196
- EP-A2- 1 136 239
- WO-A1-2011/023899
- US-A1- 2010 276 075
- US-A1- 2013 026 678
- US-A1- 2016 207 818

## Description

L'invention concerne un procédé et un dispositif pour la consolidation d'une préforme textile et la réalisation d'un surmoulage sur la pièce ainsi consolidée. L'invention est plus particulièrement adaptée à la réalisation d'une pièce en matériau composite renforcée par des fibres longues ou continues, sous la forme générale d'une coque, laquelle pièce comprend une face technique surmoulée, comprenant notamment des nervures, des rainures, des puits de fixation ou des éléments de positionnement ou d'assemblage, sans que cette liste ne soit limitative ni exhaustive.

Un telle pièce est par exemple représentée par un capot de matériel électronique, tel un écran de télévision, mais l'invention est également applicable dans d'autres domaines, tels que l'automobile, l'aéronautique ou la bagagerie. L'utilisation d'une préforme textile à fibres longues ou continues permet de réduire le poids d'une telle pièce tout en augmentant sa résistance mécanique en comparaison des solutions de l'art antérieur utilisant un polymère injecté renforcé par des fibres courtes.

À cette fin, selon l'art antérieur, un flan préconsolidé constitué d'un matériau composite thermoplastique stratifié à fibres continues est préchauffé à une température suffisante pour permettre le glissement interlaminaire des plis le constituant. Ledit flan est placé sur une matrice de formage et thermoformé à la forme de cette matrice, lors de la fermeture du moule. Après, ou concomitamment à la reconsolidation dudit flan en forme, la face technique est surmoulée par injection dans ce même moule, puis la pièce est démoulée après refroidissement.

Ce cycle de fabrication entraîne des cycles thermiques de chauffage et de refroidissement tant du flan que du moule. Ainsi, pour réaliser le thermoformage le flan est porté à une température proche, voire supérieure à la température de fusion de sa matrice polymère, déconsolidant ainsi le flan, afin permettre le glissement interlaminaire des plis le constituant, alors que la matrice de formage, et le moule d'une manière générale, sont préchauffés à une température proche ou légèrement supérieure à la température de consolidation ou de transition vitreuse de ladite matrice polymère, la consolidation en forme du flan puis l'injection nécessite un refroidissement du moule à une température adaptée à la consolidation du flan mais suffisante pour permettre l'injection et le remplissage de tous les détails du moule, puis la pièce doit être refroidie à une température adaptée à son démoulage, avant l'ouverture du moule. Ledit moule doit ensuite être réchauffé pour reprendre le cycle. La durée des cycles de chauffage-refroidissement, définissent le temps de réalisation de la pièce. Lorsqu'ils sont mis en oeuvre par des moyens de chauffage indirect du moule, par exemple via une circulation fluide ou des résistances électriques parcourant le moule, ces temps sont longs en regard des cadences de production visées pour les pièces redevables de l'invention. Le chauffage du flan est, selon l'art antérieur, réalisé en dehors du moule par des panneaux radians dans l'infrarouge, ledit flan, une fois déconsolidé et prêt à être thermoformé, perd de sa cohésion et devient difficile à manipuler.

La technique de chauffage par induction telle que décrite, notamment, dans le document EP 1 894 442, permet de chauffer et de refroidir rapidement un moule destiné au thermoformage ou à l'injection, et d'obtenir un contrôle fin tant de la température que de l'uniformité de cette température sur les surfaces moulantes du moule en limitant le volume du moule effectivement chauffé. Cette solution technique, si elle permet de contrôler la température d'un moule notamment d'injection ou de thermoformage ne permet pas de réaliser le préchauffage du flan.

Le document EP 2 861 399 décrit une autre solution technique de chauffage des surfaces d'un moule, utilisant un élément rayonnant porté à haute température, placé en vis-à-vis desdites surfaces moulantes. Cette solution technique seule ne permet pas le contrôle de la température dans la cavité moulante une fois l'élément rayonnant écarté des surfaces et le moule fermé.

Le document EP 1 136 239 et le document WO 2011/023899 décrivent chacun un dispositif pour le thermoformage d'une pièce composite et le surmoulage par injection d'une forme sur une face de ladite pièce composite, dans un moule comportant une matrice de formage et un poinçon appairés définissant entre eux une cavité fermée.

Le document US 2013/026678 décrit un moule pourvu d'un chauffage par induction et d'un circuit de refroidissement.

Les documents US 2016/207818 et EP 0 576 196 décrivent chacun un dispositif comprenant un poste de chargement déchargement combiné avec un poste d'injection ou de surmoulage.

Le document US 2010/276075 décrit un procédé de thermoformage d'un flan composite comprenant une opération de surmoulage dans l'outillage de thermoformage.

L'invention vise à résoudre les inconvénients de l'art antérieur pour la réalisation à haute cadence d'une pièce composite thermoformée comprenant un surmoulage, et concerne à cette fin un dispositif pour le thermoformage d'une pièce composite et le surmoulage par injection d'une forme sur une face de ladite pièce composite conformément à la revendication 1.

Ainsi, le dispositif objet de l'invention permet de préchauffer directement le flan sur la matrice de formage avant de fermer moule pour réaliser l'injection. Le flan n'étant préchauffé qu'une fois placé sur la matrice de formage, il est facile à manipuler lors de son chargement, notamment par un robot.

L'invention est avantageusement mise en oeuvre selon les modes de réalisation et les variantes exposés ci-après, lesquels sont à considérer individuellement ou selon toute combinaison techniquement opérante.

Conformément à l'invention, l'élément rayonnant est un panneau chauffé par induction. Ainsi le panneau, par exemple un panneau en graphite, est porté rapidement à haute température et permet une chauffe rapide du flan et de la matrice de formage.

Conformément à l'invention, le dispositif objet de l'invention comprend un générateur à haute fréquence, le réseau d'inducteurs de la matrice de formage et celui assurant le chauffage de l'élément rayonnant étant alimentés en courant haute fréquence par ce seul et même générateur, réduisant ainsi la puissance électrique installée et le coût de l'installation.

Selon un mode de réalisation particulier, le dispositif objet de l'invention comprend un commutateur pour l'alimenter alternativement le réseau d'inducteurs de la matrice de formage et celui assurant le chauffage de l'élément rayonnant par le générateur haute fréquence unique. Le commutateur permet de changer facilement et automatiquement le poste du transfert alimenté en courant à haute fréquence par le générateur unique.

Selon un mode de réalisation particulièrement avantageux, le dispositif objet de l'invention comporte deux matrices de formage chacune appairée avec le poinçon et comportant chacune un réseau d'inducteurs et un circuit de refroidissement pour le chauffage et le refroidissement de leurs surfaces moulantes, montées sur le transfert de sorte que l'une des matrices se trouve au poste de chargement-déchargement lorsque l'autre se trouve au poste de thermoformage et d'injection.

Avantageusement, le circuit d'induction de chauffage de l'élément rayonnant ou le circuit comprenant le réseau d'inducteurs de la matrice de formage, comprend un coffret de capacités ou une bobine d'ajustement. Ces moyens permettent d'adapter l'impédance de chaque circuit et d'assurer le démarrage du générateur haute fréquence et son fonctionnement optimal, quelque soit le circuit alimenté, bien que ceux-ci aient des caractéristiques électriques différentes.

L'invention concerne également un procédé pour la réalisation d'une pièce composite en forme comprenant un surmoulage, conformément à la revendication 5.

Ainsi les tâches sont réalisées en parallèle et la cadence de production est augmentée. Lorsqu'une des matrices arrive au poste de chargement-déchargement celle-ci est dite froide, c'est-à-dire que sa température est au plus la température de démoulage. Il est alors facile de manipuler le flan, lui même à une température proche de la température ambiante, et de le placer sur ladite matrice, que ce soit par une opération manuelle ou par l'intermédiaire d'un robot.

Conformément à l'invention, l'étape ii) comprend le chauffage du flan et de la matrice de formage au moyen de l'élément rayonnant.

Selon un mode de réalisation mettant en oeuvre un dispositif selon l'invention comprenant un commutateur, ledit commutateur dirige l'alimentation en courant à haute fréquence vers les moyens de chauffage de l'élément rayonnant pendant l'étape ii) et vers le réseaux d'inducteurs la deuxième matrice de formage pendant les étapes iv) à vi).

L'invention est exposée ci-après selon ses modes de réalisation préférés, nullement limitatifs, et en référence aux figures 1à 5, dans lesquelles :
- la figure 1 montre selon une vue en perspective un exemple de réalisation du dispositif objet de l'invention ;
- la figure 2 est une vue partielle en perspective d'un exemple de réalisation du commutateur sans ses capots ;
- la figure 3 représente selon une vue partielle en perspective, un exemple de réalisation de la connexion pilotée, sans ses capots, pour le raccordement électrique du réseau d'inducteurs de la matrice de formage au générateur haute fréquence au poste d'injection du dispositif objet de l'invention ;

- la figure 4 illustre selon une vue schématique en coupe, un exemple de réalisation du dispositif objet de l'invention comprenant deux matrices de formage ;
- et la figure 5 est un chronogramme d'un exemple de mise en oeuvre du dispositif objet de l'invention selon un exemple de réalisation du procédé objet de l'invention.

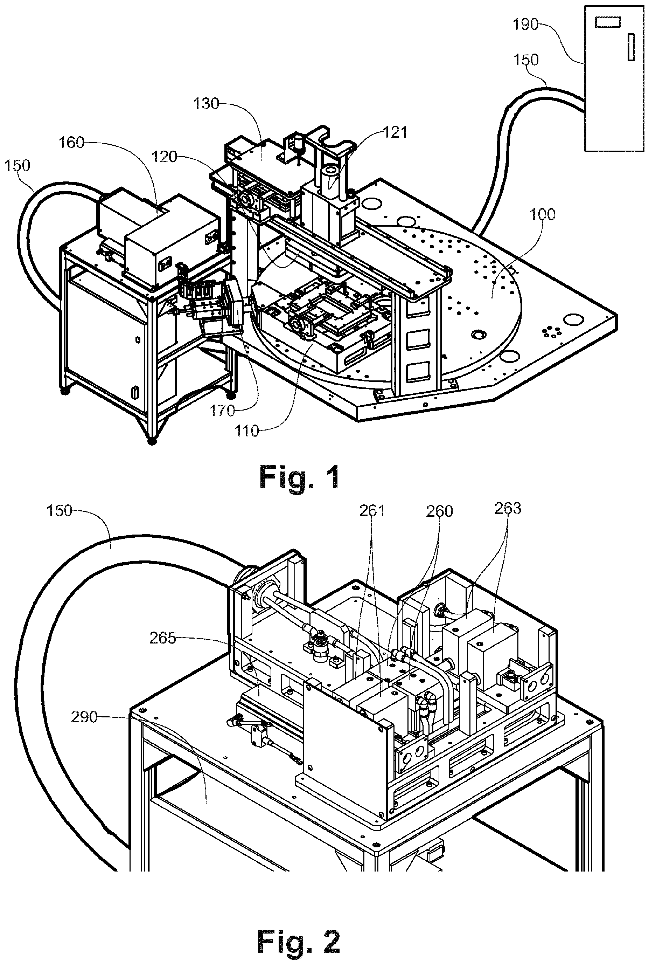

Figure 1, selon un exemple de réalisation du dispositif objet de l'invention dans un mode de réalisation ne comportant qu'une seule matrice de formage, ledit dispositif comprend un transfert circulaire (100) rotatif sur au moins un quart de tour (90°). Une matrice (110) est montée sur ledit transfert (100) et se trouve sur cette figure au poste d'injection, en face d'un poinçon (120) appairé avec ladite matrice et dont le déplacement vertical, est commandé par un vérin (121). Le déplacement vertical dudit poinçon (120) permet de fermer et d'ouvrir le moule constitué par le poinçon (120) et la matrice (110) dont les surfaces moulantes délimitent une cavité fermée comprenant la pièce lorsque le moule est fermé. Lorsque le plateau du transfert circulaire est tourné d'un quart de tour, ladite matrice (110) se trouve au poste de chargement / déchargement, sous un dispositif de préchauffage (130) comprenant un panneau rayonnant et des moyens pour permettre le chauffage de ce panneau rayonnant. À titre d'exemple non limitatif, le panneau rayonnant est constitué d'un panneau de graphite. Le dispositif est relié par une ligne de puissance (150) à un générateur de courant à haute fréquence (190). À titre d'exemple ledit générateur produit un courant à une fréquence comprise entre 10 kHz et 200 kHz pour une puissance comprise entre une dizaine et quelques centaines de KW, selon l'application visée. Un commutateur (160) permet d'alimenter en courant haute fréquence, à partir de ce générateur (190) unique, la matrice de formage (110) lorsqu'elle est au poste d'injection ou le dispositif de préchauffage (130) au poste de chargement / déchargement. Selon cet exemple de réalisation, le poste d'injection comprend en outre une connexion (170) pilotée coopérant avec des moyens associés à la matrice de formage (110) de sorte à alimenter électriquement un réseau d'inducteurs de ladite matrice.

Figure 2, selon un exemple de réalisation, le commutateur (160) comporte une arrivée (150) de courant électrique à haute fréquence, connectée d'un côté au générateur haute fréquence et de l'autre à un cavalier (260) constitué de deux blocs conducteurs, par exemple en cuivre. Selon cet exemple de réalisation, le cavalier (260) est apte à se déplacer selon un mouvement de translation commandé par un moteur électrique pas à pas (265), entre deux paires (261, 263) de contacts récepteurs, l'une (263) desdites paires étant connectée au circuit de chauffage par induction d'un panneau rayonnant et l'autre (261) au circuit d'induction comprenant un réseaux d'inducteurs dans la matrice de formage. Lesdits contacts récepteurs (261, 263) sont chacun constitués de deux blocs conducteurs, par exemple en cuivre. Un boîtier de commande électronique (290) pilote le moteur pas à pas (265) pour commuter l'alimentation haute fréquence entre le panneau rayonnant et le réseau d'inducteurs de la matrice de formage. Chacun des circuits électriques d'induction du panneau rayonnant et de la matrice de formage comprend, si besoin, un coffret de capacités et une bobine d'ajustement (non représentés), tels que décrits dans le document EP 2 742 773 / US-2014-0183178, de sorte à permettre le démarrage du générateur haute fréquence et son fonctionnement optimal lorsque celui-ci alimente l'un ou l'autre des circuits d'induction.

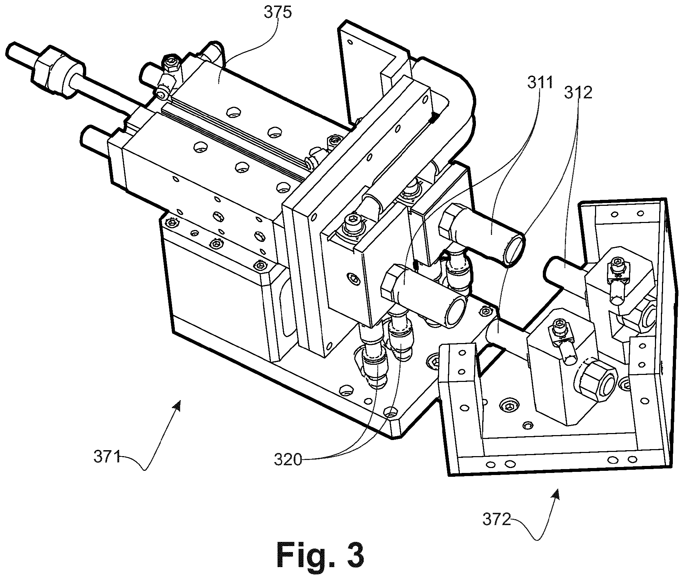

Figure 3, selon un exemple de réalisation, la connexion pilotée comprend une partie (371) fixe par rapport au poste d'injection du transfert et une partie (372) liée à la matrice de formage. La partie fixe (371) comprend une paire de contacts femelles (311) isolés sur leur surface extérieure, aptes réaliser une connexion avec une paire de contacts mâles (312) sur la partie (372) liée à la matrice de formage. Selon cet exemple de réalisation, la connexion est réalisée par le déplacement desdits contact femelles (311), ce déplacement étant réalisé par un vérin pneumatique (375) à double effet. Des moyens (320) de circulation d'air comprimé permettent de refroidir les contacts (311).

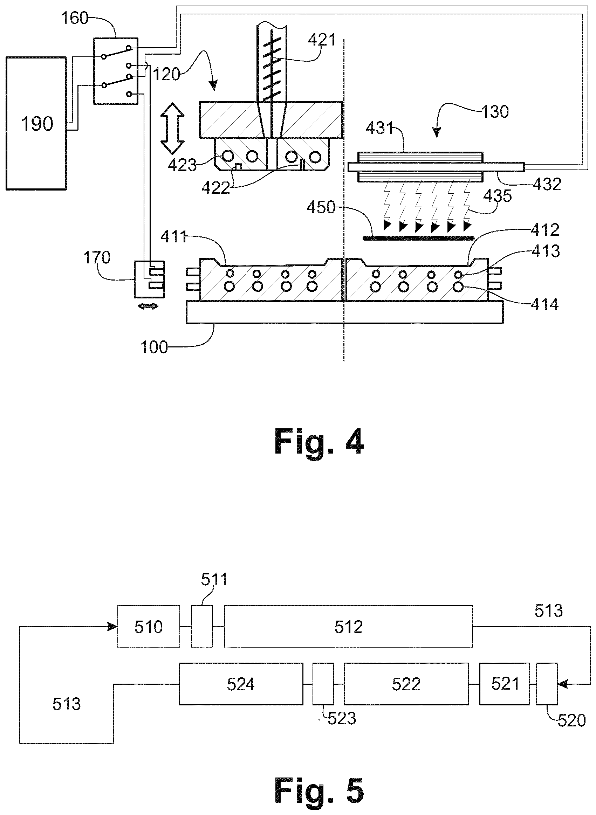

Figure 4, selon un mode de réalisation, le dispositif objet de l'invention comprend deux matrices de formage (411, 412) placées sur le plateau transfert (100). Ledit plateau transfert (100) permet de déplacer la première (411) et la seconde matrice (412) alternativement entre le poste de chargement / déchargement et le poste d'injection en réalisant une portion de tour, 90° ou 180°. Ainsi le dispositif objet de l'invention, selon ce mode de réalisation permet de réaliser deux pièces par des opérations réalisées en parallèle sur ces deux pièces selon un cycle pendulaire. Chaque matrice de formage (411, 412) comprend un réseau d'inducteurs (413) s'étendant dans des cavités réalisées dans ladite matrice et des conduits (414) de refroidissement pour la circulation d'un fluide. Ce mode de réalisation des matrices de formage et ses variantes sont décrits notamment dans le document EP 1 894 442. Le poinçon (120) positionné au poste d'injection, est appairé avec les matrices, définissant avec chacune d'elle une cavité fermée lorsque qu'il est mis en contact avec une des matrices de formage, cavité fermée comprise entre les surface moulantes de la matrice et du poinçon. La surface moulante du poinçon comprend des formes (422) correspondant aux reliefs créés sur la pièce réalisée par surmoulage. À cette fin, ledit poinçon comprend des moyens (421) d'injection plastique dans la cavité fermée comprise entre les surfaces moulantes du poinçon et de la matrice de formage. Selon un mode de réalisation, le poinçon comprend également des conduits (423) de refroidissement pour la circulation d'un fluide. Le poste de chargement / déchargement comprend un dispositif (130) de chauffage par élément rayonnant. Ce dispositif de chauffage comprend, par exemple, un panneau (431) de graphite, placé dans un spire (432) laquelle spire est connectée au générateur haute fréquence (190) via le commutateur (160). Lorsque ladite spire (432) est alimentée en courant haute fréquence, le panneau de graphite (431) est chauffé par induction et rapidement porté à haute température, par exemple 1000° C. Le coefficient d'émissivité élevé du graphite permet de transférer par rayonnement une grande part de l'énergie utilisée pour son chauffage. Le chauffage par induction permet un chauffage rapide du panneau rayonnant ce qui évite de maintenir ledit panneau en permanence à haute température, limitant ainsi sa dégradation par oxydation. Le rayonnement thermique (435) généré par le dispositif (130) de chauffage par élément rayonnant, permet de porter le flan (450) composite stratifié utilisé pour la réalisation de la pièce, jusqu'à une température T1 adaptée à son thermoformage, alors que ledit flan (450) se trouve posé sur la matrice (412) au poste de chargement / déchargement, mais aussi, de préchauffer la surface moulante de ladite matrice (412) pendant que le flan est posé sur ladite matrice. Ledit flan (450) est déposé froid sur la matrice (412) froide, par un opérateur ou un robot selon des variantes de mise en oeuvre.

Selon des exemple de réalisation, le flan est une stratification de plis fibreux dans un matrice thermoplastique complètement consolidée, ou partiellement consolidée, dans ce cas l'opération de thermoformage correspond à un estampage, ou le flan est constitué d'une stratification de plis non consolidée, et dans ce cas l'opération de thermoformage se rapproche d'une consolidation en forme, les plis préimprégnés d'un polymère thermoplastique étant relativement rigides, même si la stratification n'est pas consolidée.

La température T1 de chauffage adaptée au thermoformage du flan est une température suffisamment élevée pour observer un ramollissement du polymère constituant la matrice du composite constituant le flan, et, selon la nature des renforts, suffisante pour permettre le glissement interlaminaire des plis fibreux. Selon la nature du flan et du polymère constituant la matrice, cette température se situe entre la température de transition vitreuse et la température de fusion du polymère. La température est déterminée notamment par essais en fonction de la nature du flan.

Avantageusement la surface moulante de la matrice comprend un revêtement, par exemple un chromage noir, ou à base carbure de silicium (SiC), permettant d'améliorer son absorption du rayonnement infrarouge et son chauffage par rayonnement. Un pyromètre (non représenté) permet de mesurer la température du flan ou de la surface moulante de la matrice au cours de leur chauffage par rayonnement. Selon une variante, la surface de la matrice est préchauffée jusqu'à une température adaptée par le panneau rayonnant (431) avant de déposer le flan. Le commutateur (160) permet de diriger le courant de puissance, généré par le générateur haute fréquence (190), via la connexion pilotée (170), vers le réseau d'inducteurs (413) de la matrice de formage (411) se trouvant au poste d'injection.

Figure 5, selon un exemple de mise en oeuvre du procédé objet de l'invention, une partie des étapes de fabrication (510 - 512) sont mise en oeuvre sur le poste de chargement / déchargement et l'autre partie des étapes de fabrication (520 - 524) est mise en oeuvre sur le poste de thermoformage / injection. Ainsi, les étapes sont réalisée en parallèle de manière à accroître la cadence de production. En partant du poste de chargement / déchargement, selon une étape de démoulage (510) la pièce préalablement thermoformée et surmoulée est retirée de la matrice de formage et la matrice est nettoyée. Au cours d'une étape (511) de chargement, un flan composite est posé sur la matrice. Au cours d'une étape (512) de préchauffage, le flan et la matrice de formage sont portés à la température de thermoformage par rayonnement. Pendant cette étape (512) le dispositif de chauffage par moyen rayonnant est alimenté en courant à haute fréquence. Par une rotation (513) du plateau transfert, la matrice et le flan préchauffés sont amenés au poste de thermoformage et d'injection. En même temps la pièce thermoformée et surmoulée dans l'autre matrice est amenée au poste de chargement / déchargement. Au cours d'une étape (520) de fermeture du moule le flan est thermoformé. Le réseau d'inducteurs de la matrice de formage est connecté au générateur haute fréquence à l'issue de l'étape de transfert. Au cours d'une étape (521) de maintien en température ladite matrice est maintenue à une température au moins égale à la température de thermoformage pour assurer une imprégnation uniforme des plis du plan ainsi formé. Cette étape vise à la consolidation subséquente de la stratification, laquelle s'entend du développement des chaînes moléculaires du polymère à travers les interfaces entre les plis de la stratification, et à la réduction des porosités à un niveau acceptable avec l'application visée.

Pendant cette étape de maintien en température les moyens rayonnants ne sont plus alimentés par le générateur. Au cours d'une étape (522) de refroidissement, le flan thermoformé se trouvant au poste de thermoformage / injection est refroidi jusqu'à une température inférieure à la température de transition vitreuse de sa matrice polymère mais suffisante pour permettre le surmoulage. Au cours d'une étape (523) d'injection, le surmoulage est réalisé. Durant cette étape le réseau d'inducteur de la matrice de formage n'est plus alimenté ce qui permet d'alimenter les moyens de chauffage par rayonnement. Au cours d'une étape (524) de refroidissement, le moule constitué de la matrice de formage et du poinçon est refroidi par circulation fluide, puis le moule est ouvert avant que le plateau transfert n'effectue (513) une nouvelle rotation, amenant la pièce finie, sur sa matrice de formage au poste de chargement / déchargement où elle est démoulée. Ainsi les opérations de fabrication sont réalisées en parallèle sur les deux pièces bien qu'un seul générateur haute fréquence ne soit utilisé.

L'utilisation d'un chauffage par induction, tant pour les matrices que pour le moyen rayonnant permet des cycles de chauffage / refroidissement rapides sur des amplitudes de températures importantes, entre la température de démoulage et la température de thermoformage, et ainsi d'avoir au deux postes du transfert un outillage, un flan et une pièce; à des températures adaptées aux opérations réalisées sur ces postes, sans délai.

Le dispositif et le procédé objets de l'invention sont adaptés à une grande variété de composites thermoplastique, tant en ce qui concerne la nature des fibres, la nature de la matrice composite ainsi que la nature du polymère injecté pour le surmoulage. Les températures de préchauffage du flan, de maintien en température, d'injection et de démoulage sont déterminées en fonction des matériaux mis en oeuvre, à partir de données existantes ou d'essais. L'atteinte de ces températures au cours des différentes étapes et l'organisation des moyens correspondants, notamment en termes de nombre d'inducteurs dans les matrices, de puissance d'induction installée et de débit fluide dans les canaux de refroidissement sont par exemple obtenus par simulation numérique des cycles de chauffage et de refroidissement.

La description ci-avant et les exemples de réalisation, montrent que l'invention atteint le but visé, à savoir qu'elle permet de réaliser en parallèle les tâches de fabrication de deux pièces thermoformées et surmoulées, en doublant quasiment la cadence de production, tout en utilisant un générateur de courant haute fréquence unique, limitant ainsi la puissance électrique installée.

## Revendications

1. Dispositif pour le thermoformage d'une pièce composite et le surmoulage par injection d'une forme sur une face de ladite pièce composite, comprenant un moule comportant une matrice de formage (110, 411, 412) et un poinçon (120) appairés définissant entre eux une cavité fermée, ladite matrice de formage étant montée sur un transfert (100) comportant :
- un poste de chargement déchargement d'un flan (150, 450)sur la matrice de formage (110, 411, 412) ;
- un poste d'injection et de fermeture du moule entre le poinçon (120) et la matrice de formage (110, 411, 412) pour réaliser le thermoformage ;
- un générateur à haute fréquence (190) ;
- la matrice de formage comprenant un réseau d'inducteurs (413) pour le chauffage de sa surface moulante et un réseau de refroidissement (414) de ladite surface moulante par circulation fluide ;
- le poste de chargement-déchargement comprenant un dispositif pour le placement d'un panneau rayonnant (431) chauffé par induction face à la surface moulante de la matrice de formage, le réseau d'inducteurs (413) de la matrice de formage et celui (432) assurant le chauffage du panneau rayonnant (431) chauffé par induction sont alimentés en courant haute fréquence par le seul et même générateur (190)

2. Dispositif selon la revendication 1, comportant un commutateur (160) pour l'alimenter alternativement le réseau d'inducteurs (413) de la matrice de formage et celui (432) assurant le chauffage du panneau rayonnant (431) par le générateur haute fréquence (190) unique.

3. Dispositif selon la revendication 1, dans lequel le circuit d'induction de chauffage du panneau rayonnant (431) ou le circuit comprenant le réseau d'inducteurs (413) de la matrice de formage, comprend un coffret de capacités ou une bobine d'ajustement.

4. Dispositif selon la revendication 1, comportant une première et une deuxième matrice de formage (411, 412) chacune appairée avec le poinçon (120) et comportant chacune un réseau d'inducteurs (413) et un circuit de refroidissement (414) pour le chauffage et le refroidissement de leurs surfaces moulantes, montées sur le transfert (100) de sorte que l'une des matrices (412) se trouve au poste de chargement déchargement lorsque que l'autre (411) se trouve au poste de thermoformage - injection.

5. Procédé pour la réalisation d'une pièce composite en forme comprenant un surmoulage, mettant en oeuvre un dispositif selon la revendication 4, comprenant les étapes consistant à :
i. placer (511) sur la première matrice de formage (411) au poste de chargement/déchargement, un flan composite (450) ;
ii. préchauffer (512) ladite matrice (411) et le flan (450) en contact avec celle-ci jusqu'à une température T1 adaptée au thermoformage dudit flan au moyen du dispositif selon la revendication 1 ;
iii. transférer (513) la matrice au poste de thermoformage - injection ;
iv. fermer (520) le moule sur ladite matrice en maintenant la température T1 de sorte à réaliser le thermoformage du flan ;
v. refroidir (522) la matrice à une température T2 adaptée à la consolidation du flan et à l'injection ;
vi. injecter (523) la partie surmoulée ;
vii. refroidir (524) la cavité moulante jusqu'à la température de démoulage ;
viii. ouvrir le moule ;
ix. transférer (513) la première matrice au poste de chargement/déchargement ;
x. démouler (511) la pièce et reprendre à l'étape i) procédé dans lequel les étapes i) et x) sont réalisées sur la première matrice en même temps que les étapes iv) à vi) sont réalisées sur la deuxième matrice et dans lequel l'étape ii) est réalisée sur la première matrice en même temps que les étapes vii) et viii) sur la deuxième matrice.

6. Procédé selon la revendication 5, mettant en oeuvre un dispositif selon la revendication 2, dans lequel le commutateur (160) dirige l'alimentation en courant à haute fréquence vers les moyens de chauffage (431) du panneau rayonnant (431) pendant l'étape ii) et vers le réseaux d'inducteurs (413) de la deuxième matrice de formage pendant les étapes iv) à vi).

## Patentansprüche

1. Vorrichtung zum Thermoformen eines Verbundteils und zum Umspritzen durch Einspritzung einer Form auf einer Seite des Verbundteils, eine Gussform umfassend, die ein Formwerkzeug (110, 411, 412) mit einen Stempel (120) gepaart beinhaltet, die untereinander einen geschlossenen Hohlraum definieren, wobei das Formwerkzeug auf einem Übergeber (100) montiert ist, beinhaltend:
- eine Station zum Beladen/Entladen eines Rohlings (150, 450) am Formwerkzeug (110, 411, 412);
- eine Station der Einspritzung und des Verschlusses der Gussform zwischen dem Stempel (120) und dem Formwerkzeug (110, 411, 412), um das Thermoformen durchzuführen;
- einen Hochfrequenzgenerator (190);
- das Formwerkzeug, ein Netz von Induktoren (413) zur Erwärmung seiner formenden Oberfläche umfassend, und ein Netz zur Kühlung (414) der formenden Oberfläche durch Fluidzirkulation;
- wobei die Station zum Beladen/Entladen eine Vorrichtung für die Positionierung einer durch Induktion erwärmten Strahlplatte (431) gegenüber der formenden Oberfläche des Formwerkzeugs umfasst, wobei das Netz von Induktoren (413) des Formwerkzeugs und dasjenige (432) die Erwärmung der Strahlplatte (431) gewährleisten, die durch Induktion erwärmt wird, und durch den einzigen und denselben Generator (190) mit Hochfrequenzstrom versorgt werden.

2. Vorrichtung nach Anspruch 1, einen Lastschalter (160) beinhaltend, um abwechselnd das Netz von Induktoren (413) des Formwerkzeugs und dasjenige (432) zu versorgen, die Erwärmung der Strahlplatte (431) durch den einzigen Hochfrequenzgenerator (190) gewährleistend.

3. Vorrichtung nach Anspruch 1, wobei der Induktionserwärmungskreislauf der Strahlplatte (431) oder der Kreislauf, der das Netz von Induktoren (413) des Formwerkzeugs umfasst, eine Kapazitätenbox oder eine Anpassungsspule umfasst.

4. Vorrichtung nach Anspruch 1, ein erstes und ein zweites Formwerkzeug (411, 412) beinhaltend, die jeweils mit dem Stempel (120) gepaart sind und jeweils ein Netz von Induktoren (413) und einen Kühlkreislauf (414) beinhalten, zur Erwärmung und Kühlung ihrer formenden Oberflächen, die am Übergeber (100) so montiert sind, dass sich eines der Werkzeuge (412) an der Station zum Beladen/Entladen befindet, wenn sich das andere (411) an der Station zum Thermoformen/Einspritzen befindet.

5. Verfahren zur Herstellung eines Verbundformteils, ein Umspritzen umfassend, unter Anwendung einer Vorrichtung nach Anspruch 4, die Schritte umfassend, bestehend aus:
i. Positionieren (511), am ersten Formwerkzeug (411) an der Station zum Beladen/Entladen, eines Verbundrohlings (450);
ii. Vorwärmen (512) des Werkzeugs (411) und des Rohlings (450) in Kontakt mit diesem auf eine Temperatur T1, die zum Thermoformen des Rohlings mittels der Vorrichtung nach Anspruch 1 geeignet ist;
iii. Übergeben (513) des Werkzeugs an die Station zum Thermoformen/Einspritzen;
iv. Verschließen (520) der Gussform am Werkzeug unter Beibehaltung der Temperatur T1, um das Thermoformen des Rohlings durchzuführen;
v. Abkühlen (522) des Werkzeugs auf eine Temperatur T2, die für die Verfestigung des Rohlings und die Einspritzung geeignet ist;
vi. Einspritzen (523) des umgespritzten Bereichs;
vii. Abkühlen (524) des formenden Hohlraums auf die Temperatur des Entformens;
viii. Öffnen der Gussform;
ix. Übergeben (513) des ersten Werkzeugs an die Station zum Beladen/Entladen;
x. Entformen (511) des Teils und Fortsetzen bei Schritt i), Verfahren, wobei die Schritte i) und x) am ersten Werkzeug gleichzeitig durchgeführt werden mit den Schritten iv) bis vi), die am zweiten Werkzeug durchgeführt werden und wobei Schritt ii) am ersten Werkzeug gleichzeitig mit den Schritten vii) und viii) am zweiten Werkzeug durchgeführt wird.

6. Verfahren nach Anspruch 5, unter Anwendung einer Vorrichtung nach Anspruch 2, wobei der Lastschalter (160) die Versorgung mit Hochfrequenzstrom zu den Erwärmungsmitteln (431) der Strahlplatte (431) während des Schritts ii) leitet und zum Netz von Induktoren (413) des zweiten Formwerkzeugs während der Schritte iv) bis vi) .

## Claims

1. A device to thermoform a composite component and injection over-moulding a shape on one face of the composite component comprising a mould, comprising a shaping die (110, 411, 412) paired with a punch thus defining a moulding cavity therebetween, the shaping die being mounted on a transfer device (100) comprising:
- a loading/unloading station to load/unload a blank (150, 450) onto the shaping die (110, 411, 412);
- an injection and mould-closure station between the punch (120) and the shaping die (110, 411, 412) for performing the thermoforming;
- a high frequency generator (190);
- the shaping die comprising a network of inductors (413) for heating its moulding surface and a cooling network (414) to cool the moulding surface by a circulation of a fluid;
- the loading/unloading station comprising a device to place an induction heated radiating panel (441) facing the moulding surface of the shaping die, the inductor network (413) of the shaping die and the one (432) heating the induction heated radiating panel (431) being supplied in high frequency current by the same single generator (190).

2. The device according to claim 1, further comprising a switch (160) to alternatively power the network of inductors (413) of the shaping die and the one (432) circuit that heats the radiating panel (431) by the single high frequency generator (190).

3. The device according to claim 1, wherein the induction circuit that heats the radiating panel (431) or the induction circuit comprising the network of inductors (413) of the shaping die comprises a capacitor unit or a adjustment coil.

4. The device according to claim 10, further comprising a first and a second shaping die (411, 412), each shaping die paired with the punch (120) each comprising an inductors network (413) and a cooling circuit (414), the two shaping dies being mounted on the transfer device (100) such that one (412) of the two shaping dies is at the loading/unloading station when the other shaping die (411) is at the injection and thermoforming station.

5. A method for making a shaped composite component comprising an over-moulding, implementing a device according to claim 4, comprising the steps consisting in:
i) placing (511) a composite blank (450) on the first shaping die (411) at the loading/unloading station;
ii) preheating (511) the shaping die (411) and the blank (450) in contact therewith to a temperature T1 suitable for thermoforming the composite blank with the device if claim 1;
iii) transferring (513) the shaping die to the thermoforming - injection station;
iv) closing (520) the mould onto the shaping die while maintaining the temperature T1 to perform the thermoforming of the composite blank;
v) cooling (552) the shaping die to a temperature T2 suitable for consolidating the composite blank and the performance of injection;
vi) injecting (523) an over-moulded part;
vii) cooling (524) the moulding cavity down to the demoulding temperature;
viii) opening the mould;
ix) transferring (513) the shaping die to the loading/unloading station;
x) demoulding (511) the shaped composite component and repeating from step i);
the method wherein steps i) and x) are performed on a first shaping die at the same time as steps iv to vi) are being performed on a second shaping die; and
wherein step ii) is performed on the first die at the same time as steps vii) and viii) are being performed on the second die.

6. The method according to claim 5, implementing a device according to claim 2, wherein a switch diverting the supply of high frequency current towards the heating means of the radiating panel (431) during step ii) and towards the network of inductors (413) of the second shaping die during steps iv) to vi).
